# FASCICULE DE BREVET EUROPEEN

(11) **EP 4 117 812 B1**
(45) Date de publication et mention de la délivrance du brevet: **22.11.2023**
(21) Numéro de dépôt: 21716491.2
(22) Date de dépôt: 10.03.2021
(51) Int. Cl.: B01J 8/10, B01J 19/00, B01J 19/28, B29B 17/02, C08J 11/02, C08J 11/08

(54) **REACTEUR DISSOLVEUR AVEC PANIER AMOVIBLE**
DISSOLVERREAKTOR MIT ABNEHMBAREM KORB
DISSOLVER REACTOR WITH REMOVABLE BASKET

(30) Priorité: 11.03.2020 FR 2002399
(43) Date de publication de la demande: 18.01.2023
(73) Titulaire: Polyloop, 26750 Genissieux (FR)
(72) Inventeur: FERRARI, Romain, 69006 LYON (FR); FAYSSE, Gabriel, 26750 GENISSIEUX (FR)
(74) Mandataire: Cabinet Laurent & Charras
(86) Numéro de dépôt international: PCT/FR2021/050405
(87) Numéro de publication internationale: WO 2021/181043

(56) Documents cités:
- WO-A1-02/28610
- US-A- 3 233 836
- US-A1- 2012 065 280

## Description

### Domaine technique

La présente invention se rapporte au domaine technique des réacteurs chimiques utilisés pour le recyclage d'articles à base de polymère et comprenant du textile ou des fibres.

L'invention se rapporte plus spécifiquement au domaine des réacteurs chimiques utilisés pour la dissolution du polymère des articles comprenant du textile ou des fibres enduit(es) ou imprégné(s) de polymère, au moyen d'un solvant afin de pouvoir récupérer le textile ou les fibres d'une part, mais aussi et surtout de pouvoir récupérer le polymère d'autre part, après retraitement du polymère dissous dans le solvant, pour sa réutilisation ultérieure.

### Technique antérieure

Par le brevet EP 2276801 B1 on connaît un procédé de recyclage d'un article à base de polychlorure de vinyle (PVC) par dissolution sélective dudit article déchiqueté dans un solvant substantiellement anhydre et par précipitation du polymère par injection de vapeur d'eau jusqu'à obtenir un mélange essentiellement constitué d'eau et de particules solides de polymère.

Le procédé de dissolution sélective avant précipitation est habituellement mis en oeuvre dans un réacteur vertical équipé d'un agitateur vertical central et d'une grille de filtration en partie inférieure du réacteur.

Ce type de réacteur, utilisé jusqu'alors pour mettre en oeuvre les procédés similaires à celui du brevet EP 2276801 B1, présentent cependant de nombreux inconvénients.

Tout d'abord l'introduction des articles déchiquetés à l'intérieur du réacteur se fait par une ouverture située sur le dessus du réacteur, dont les dimensions sont réduites pour répondre à des problématiques d'étanchéité, et cette introduction est longue, difficile et fastidieuse, pouvant prendre une heure ou plus. Il en résulte une importante perte de temps et un temps d'immobilisation du réacteur qui sont peu rentables économiquement.

Ensuite, l'évacuation des liquides hors du réacteur se fait par sa partie inférieure à travers une grille de filtration en partie basse présentant une petite surface limitée à la section du réacteur, ce qui est lent et peu efficace, notamment lorsque les articles recyclés comportent des fibres ou un textile qui retiennent les liquides. Il en résulte en outre que ces fibres ou textiles retiennent une proportion importante de solution après dissolution, nécessitant une opération de rinçage longue et moins efficace. Il en résulte aussi que ces fibres ou textiles retiennent une proportion importante de solvant après cette opération de rinçage nécessitant une opération de stripping (pour évacuer les résidus de solvants) plus longue et plus fastidieuse en énergie. Enfin, après le procédé de recyclage, l'extraction de ces fibres ou textiles du réacteur doit se faire par une remise en suspension en eau puis une évacuation par une chasse à l'eau au travers d'une ouverture dont les dimensions sont réduites pour répondre à des problématiques d'étanchéité et cette extraction est longue, difficile et fastidieuse, particulièrement si les fibres ou textiles se sont agglomérées.

Aussi les fibres ou textiles ressortent mouillées du réacteur, avec un poids apparent accrus en raison de la rétention de liquide, et nécessitent des étapes ultérieures d'égouttage, d'essorage et de séchage avant traitement pour élimination ou valorisation.

Enfin, lorsque les articles recyclés comportent des fibres ou un textile, lesdites fibres ou ledit textile a ou ont tendance à s'enrouler autour de l'agitateur lors de la rotation de ce dernier. Il est alors nécessaire de retirer manuellement lesdites fibres ou ledit textile, ce qui est à la fois difficile et très long. Ce type de problème est d'une telle importance que les procédés similaires à celui du brevet EP 2276801 ont actuellement tendance à ne plus être utilisés pour recycler des articles comportant des fibres ou un textile. US2012/0065280 décrit un réacteur avec une cage tournante.

### Présentation de l'invention

L'objet de la présente invention vise par conséquent à fournir une solution aux problèmes rencontrés lors de l'utilisation des réacteurs chimiques pour le recyclage d'articles à base de polymère et de textile ou de fibres.

Les objets assignés à la présente invention sont atteints à l'aide d'un réacteur horizontal comportant un carter externe fixe de forme générale cylindrique circulaire, équipé d'au moins une entrée de liquide et d'au moins une sortie de liquide, avec une paroi cylindrique bordée par une face frontale et une face distale opposées. Ce réacteur est caractérisé en ce que le carter présente une ouverture prévue dans sa face frontale, cette ouverture étant équipée d'un couvercle pouvant être refermé de manière étanche.

Complémentairement le réacteur comporte en outre :
- une cage tournante de forme générale cylindrique circulaire, comportant de multiples ouvertures, logée dans le carter et montée à rotation autour d'un axe sensiblement horizontal se prolongeant selon l'axe longitudinal du carter,
- un moteur pour entraîner la cage tournante à rotation,
- un unique arbre rotatif horizontal reliant mécaniquement la cage tournante au moteur et se prolongeant vers l'extérieur depuis la face distale du carter,
- au moins un palier prévu autour de l'arbre rotatif pour le maintenir et le guider, et supporter le poids de la cage tournante en porte à faux,
- au moins un panier amovible comportant de multiples ouvertures et prévu pour pouvoir être introduit et préférentiellement fixé à l'intérieur de la cage tournante et en être extrait au travers d'une face circulaire ouverte de la cage tournante prévue en regard de l'ouverture équipée d'un couvercle.

Grâce à l'utilisation d'un panier extractible pour le chargement des articles à dissoudre, le chargement des articles à dissoudre et le déchargement des matières solides non solubles est avantageusement facile, fiable et rapide. L'égouttage et l'essorage des matières solides imprégnées de liquide peuvent avantageusement être effectués à l'intérieur du réacteur, ce qui rend plus efficace les opérations de rinçage au solvant puis les opérations de stripping pour chasser le solvant de rinçage et limite la présence d'eau ou d'autres liquides dans ces matières solides après extraction du réacteur. L'entraînement en rotation de la cage tournante et du panier amovible permet d'effectuer un essorage centrifuge efficace.

L'utilisation d'un panier extractible entraîné à rotation à l'intérieur de la cage tournante permet avantageusement de dissoudre les articles à base de polymère de manière efficace, sans risque d'enroulement de fibres ou de textile autour d'un quelconque agitateur ou d'une autre pièce tournante au sein des articles à dissoudre.

Les multiples ouvertures de la cage tournante et du panier permettent de faire baigner les articles à dissoudre dans du solvant, de rincer les matières solides, de les égoutter et les essorer, de manière très efficace, avec un colmatage moins rapide qu'avec la grille de filtration des réacteurs antérieurs.

La surface de filtration efficace de ce réacteur est environ 10 fois supérieure à celle du réacteur vertical d'un même volume. En effet, à titre d'exemple, pour un réacteur de 1,570 m³ de capacité, soit un cylindre de 2 m de hauteur et 1 m de diamètre, le filtre inférieur présente une surface maximale de 0,78 m² alors que le panier extractible représente une surface 7,85 m².

La rotation de la cage tournante et du panier peut être modulée et inversée pour une meilleure agitation et pour une meilleure dissolution des articles à base de polymère.

L'efficacité accrue du réacteur pour la dissolution d'articles à base de polymère permet avantageusement de réduire à la fois la quantité de solvant utilisée et le temps d'utilisation du réacteur, ce qui procure notamment un avantage économique et écologique.

Sa conception permet également de réaliser un rinçage plus rapide, plus efficace et plus économique des matières solides, par exemple après dissolution du polymère.

Selon un exemple de réalisation, le réacteur comporte au moins un dispositif d'immobilisation destiné à arrimer l'au moins un panier amovible à l'intérieur de la cage tournante. Ce dispositif permet notamment aux paniers amovibles logés à l'intérieur de la cage tournante de ne pas provoquer de vibrations au sein du réacteur lorsqu'ils sont entraînés à rotation avec la cage tournante.

Selon un autre exemple de réalisation, le réacteur comporte au moins un dispositif de guidage destiné à guider et centrer la cage tournante à l'intérieur du carter. Ce dispositif permet notamment de réduire les vibrations au sein du réacteur lorsque la cage tournante est entraînée à rotation.

Selon un autre exemple de réalisation, le réacteur comporte au moins un palier d'étanchéité prévu sur l'arbre rotatif au niveau de la face distale du carter de sorte d'assurer l'étanchéité entre le carter et l'arbre rotatif.

Selon un exemple de réalisation supplémentaire, le panier amovible comporte des pales d'agitation réparties sur sa face interne. Ces pales d'agitation permettent d'améliorer l'agitation à l'intérieur du panier amovible et par conséquent d'améliorer la dissolution des articles à base de polymère.

Selon un autre exemple de réalisation, le diamètre interne de l'ouverture du carter équipée d'un couvercle est supérieur ou égal au diamètre interne de la cage tournante. Ainsi, le couvercle permet préférentiellement une ouverture toute largeur pour un accès total à la face ouverte de la cage tournante. Grâce au support de la cage tournante en porte à faux, l'accès à la face ouverte de la cage tournante est entièrement libre et permet à l'opérateur d'avoir de la place pour circuler au niveau de la face frontale du carter et pour effectuer les manoeuvres d'introduction ou d'extraction d'un panier amovible à l'intérieur ou hors de la cage tournante.

Selon un autre exemple de réalisation, au moins un panier amovible est de forme générale cylindrique. Cette forme permet notamment d'offrir une importante surface pour le dépôt des articles à dissoudre, et pour l'égouttage et l'essorage des matières solides. Elle permet également d'utiliser un maximum du volume disponible à l'intérieur du réacteur.

Selon un exemple de réalisation supplémentaire, le carter est étanche lorsque le couvercle est fermé. Ceci permet d'éviter toute fuite de liquide ou de vapeurs en dehors du réacteur.

Selon un autre exemple de réalisation, le panier amovible comporte une couche de protection amovible et perméable aux liquides sur sa face interne. Cette couche permet notamment de protéger l'intérieur du panier amovible lorsque les articles à dissoudre sont particulièrement agressifs ou abrasifs.

Selon un autre exemple de réalisation supplémentaire, la couche de protection amovible est une grille ou un filet, ce qui permet de protéger efficacement et à moindre coût l'intérieur du panier amovible, tout en laissant passer les liquides.

Selon un exemple de réalisation, le panier amovible comporte au moins une trappe d'accès. Cette au moins une trappe d'accès permet avantageusement l'introduction des articles à dissoudre et de la couche de protection amovible à l'intérieur du panier amovible, ainsi que leur extraction.

Selon un autre exemple de réalisation, le réacteur comporte un dispositif automatisé comportant des actionneurs prévus pour introduire le panier amovible à l'intérieur de la cage tournante et l'en extraire. Ceci facilite avantageusement le travail de l'opérateur et diminue les durées des opérations et les risques d'accident lors de la manipulation des paniers amovibles au niveau du réacteur.

Selon un exemple de réalisation supplémentaire, le réacteur comporte un dispositif de guidage en translation du panier amovible à l'intérieur de la cage tournante. Ce dispositif facilite avantageusement l'introduction des paniers amovibles à l'intérieur de la cage tournante et son extraction. Avantageusement, le dispositif de guidage en translation peut également être prévu pour assurer le positionnement et le maintien des paniers amovibles à l'intérieur de la cage tournante.

Selon un exemple de réalisation, l'arbre rotatif comporte un conduit traversant présentant une extrémité d'alimentation prévue pour être raccordée à une alimentation en vapeur ou un liquide et une extrémité de sortie qui débouche à l'intérieur d'au moins un panier amovible. L'entrée de vapeur ou d'un liquide, par exemple un produit de traitement pour le stripping, dans les paniers amovibles directement par l'arbre rotatif horizontal améliore le stripping des fibres après rinçage.

Les objets assignés à la présente invention sont également atteints à l'aide d'un procédé de recyclage d'articles à base de polymère et de textile ou de fibres au moyen d'un réacteur selon l'invention.

### Brève description des figures

D'autres caractéristiques et avantages de la présente invention apparaîtront plus clairement à la lecture de la description qui va suivre, faite en référence aux dessins annexés, donnés à titre d'exemples non limitatifs, dans lesquels :
- La figure 1 est une vue schématique en coupe d'un réacteur selon l'invention, dans lequel un panier amovible chargé d'articles à recycler est logé dans la cage tournante.
- La figure 2 est une vue schématique en coupe d'un réacteur selon l'invention, dans lequel un panier amovible en cours d'introduction ou de retrait dans la cage tournante ou hors de celle-ci.
- La figure 3 est une vue schématique en perspective du réacteur représenté sur la figure 2.
- La figure 4 est une vue schématique en coupe d'un réacteur selon l'invention, dans lequel deux paniers amovibles chargés d'articles à recycler sont logés l'un au-dessus de l'autre dans la cage tournante.
- La figure 5 est une vue schématique en coupe d'un réacteur selon l'invention, dans lequel deux paniers amovibles chargés d'articles à recycler sont logés l'un derrière l'autre dans la cage tournante.
- La figure 6 est une vue schématique en coupe d'un réacteur selon l'invention, dans lequel l'arbre rotatif intègre un conduit traversant.

### Description détaillée de l'invention

Les éléments structurellement et fonctionnellement identiques présents sur plusieurs figures distinctes, sont affectés d'une même référence numérique ou alphanumérique.

Le réacteur (1) selon l'invention est préférentiellement un réacteur (1) chimique utilisé pour le recyclage d'articles (2) à base de polymère et de textile ou de fibres, dans lequel ces articles (2) sont soumis à une dissolution du polymère au moyen d'un solvant afin de pouvoir récupérer le textile ou les fibres d'une part, mais aussi et surtout de pouvoir récupérer le polymère d'autre part, après retraitement du polymère dissous dans le solvant. Lors de la mise en oeuvre de ce procédé, le solvant peut être régénéré pendant la dissolution si le polymère n'a pas été entièrement dissout. Après dissolution du polymère, les résidus solides, à savoir le textile ou les fibres, sont généralement rincés avec un solvant chaud puis avec de l'eau chaude.

De manière générale, le réacteur selon l'invention peut être utilisé pour la mise en oeuvre de tout procédé de traitement ou de dissolution de matières solides, voire pour tout procédé de mise en solution d'une matière solide dans un solvant.

Le réacteur (1) selon l'invention est un réacteur horizontal, ce qui le distingue des réacteurs verticaux classiques habituellement utilisés dans l'industrie chimique.

Par le terme « horizontal » ont tient ici à différencier le réacteur (1) de l'invention des réacteurs verticaux classiques. Dans les faits, le réacteur (1) selon l'invention peut présenter une légère inclinaison, par exemple de 0° à 10° par rapport à l'horizontal. Une inclinaison complique le chargement et le déchargement du panier, mais peut permettre une meilleure vidange de fond.

Le réacteur (1) comporte un carter (3) fixe de forme générale cylindrique circulaire, avec une paroi cylindrique (4) bordée par une face frontale (5) au niveau de laquelle les articles (2) à recycler sont introduits dans le réacteur (1), et une face distale (6) au niveau de laquelle sont notamment situées les motorisations du réacteur (1), ces deux faces (5, 6) étant opposées.

Le carter (3) comporte au moins une entrée de liquide (7), notamment pour alimenter le réacteur (1) en solvant et en eau de rinçage, et une sortie de liquide (8) pour l'évacuation du polymère dissout, du solvant non utilisé et des liquides qui résultent du rinçage.

Le réacteur (1) comporte une ouverture (9) prévue dans sa face frontale (5) pour l'introduction des articles (2) à traiter, cette ouverture (9) étant équipée d'un couvercle (10) pouvant être refermé de manière étanche.

Le carter (3) est étanche lorsque le couvercle (10) est fermé. Par étanche, on entend qu'il ne laisse passer aucun liquide ou gaz en dehors du réacteur, hormis par les orifices prévus à cet effet, notamment l'au moins une entrée de liquide (7) et l'au moins une sortie de liquide (8), dans les conditions normales de pression et de température d'utilisation du réacteur (1).

Le réacteur (1) se particularise en ce qu'il comporte en outre une cage tournante (11) de forme générale cylindrique circulaire, comportant de multiples ouvertures (12). Cette cage tournante (11) est logée dans le carter (3) et montée à rotation autour d'un axe sensiblement horizontal se prolongeant selon l'axe longitudinal (13) du carter (3).

La face circulaire frontale (20) de la cage tournante (11), c'est-à-dire la face de la cage tournante (11) qui est prévue en regard de la face frontale (5) du carter (3), présente une ouverture et est préférentiellement entièrement ouverte.

La face circulaire distale (21) de la cage tournante (11), opposée à la face circulaire frontale (20), est préférentiellement fermée par une paroi présentant de multiples ouvertures (12).

La cage tournante (11) est entraînée à rotation par un moteur (14) par l'intermédiaire d'un arbre rotatif (15) horizontal reliant mécaniquement la cage tournante (11) au moteur (14) et se prolongeant vers l'extérieur depuis la face distale (6) du carter (3).

Le réacteur (1) comporte un seul arbre rotatif (15) horizontal, contrairement à certains contenants pouvant être montés à rotation au niveau de deux arbres coaxiaux prévus de part et d'autre desdits contenants.

Afin de supporter le poids de la cage tournante (11) en porte à faux, le réacteur (1) comporte également au moins un palier (16) prévu autour de l'arbre rotatif (15) pour le maintenir et le guider.

Le réacteur (1) peut également comporter au moins un palier d'étanchéité (17) prévu sur l'arbre rotatif (15) au niveau de la face distale (6) du carter (3) de sorte d'assurer l'étanchéité entre le carter (3) et l'arbre rotatif (15).

Le réacteur (1) se particularise également en ce qu'il comporte aussi au moins un panier amovible (18) comportant de multiples ouvertures (19) et prévu pour pouvoir être introduit à l'intérieur de la cage tournante (11) et en être extrait au travers de la face circulaire (20) ouverte de la cage tournante (11). Les paniers amovibles (18) sont préférentiellement de forme générale cylindrique. Ils peuvent présenter une section de forme circulaire, étoilée, ovoïde ou crénelée. Les paniers amovibles (18) peuvent également être légèrement coniques.

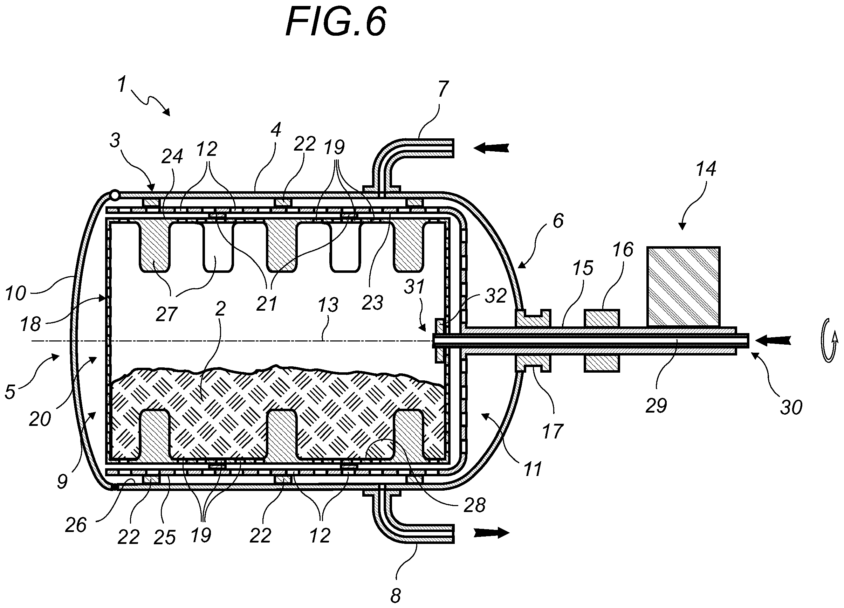

Selon un mode de réalisation de l'invention, l'arbre de rotatif est percé pour permettre d'introduire de la vapeur ou un liquide directement dans le panier. Ainsi, comme illustré à la figure 6, l'arbre rotatif (15) est creux et intègre un conduit traversant (29) pour permettre d'introduire de la vapeur ou un liquide directement dans les paniers amovibles (18), ce qui améliore notamment l'efficacité des opérations de stripping. Dans ce but, une extrémité d'alimentation (30) du conduit traversant (29) est prévue pour être raccordée à une alimentation en vapeur ou un liquide, tandis que l'autre extrémité du conduit traversant (29), désignée en tant qu'extrémité de sortie (31), débouche à l'intérieur du réacteur (1), préférentiellement à l'intérieur d'au moins un panier amovible (18). Les paniers amovibles (18) peuvent alors présenter une liaison (32), non nécessairement étanche, avec le conduit traversant (29) ou un simple orifice de passage pour le conduit traversant (29) afin de permettre l'introduction de vapeur ou de liquides directement à l'intérieur desdits paniers amovibles (18).

Les paniers amovibles (18) peuvent en outre présenter des tuyères (non représentées) permettant d'optimiser la circulation des liquides et le brassage.

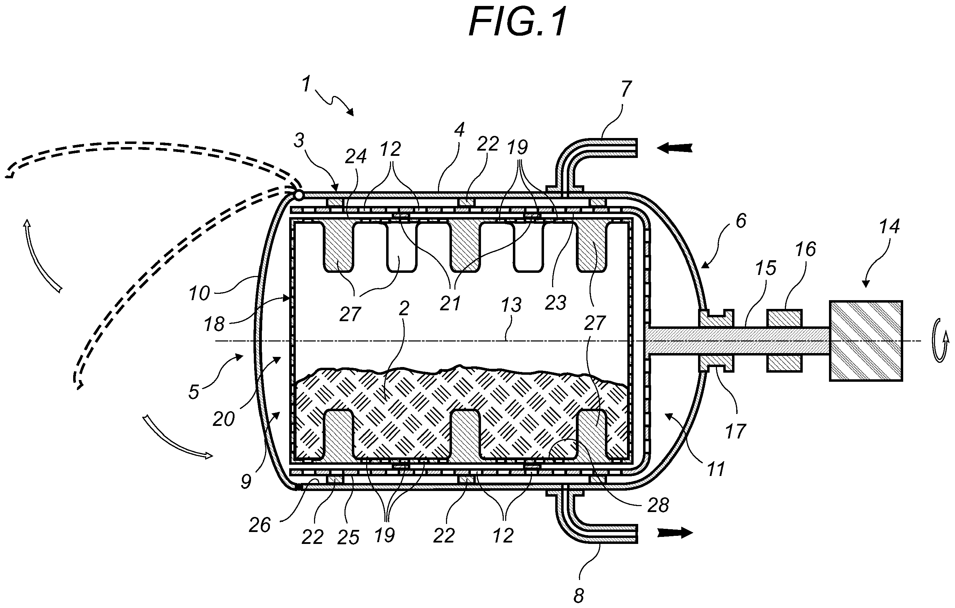

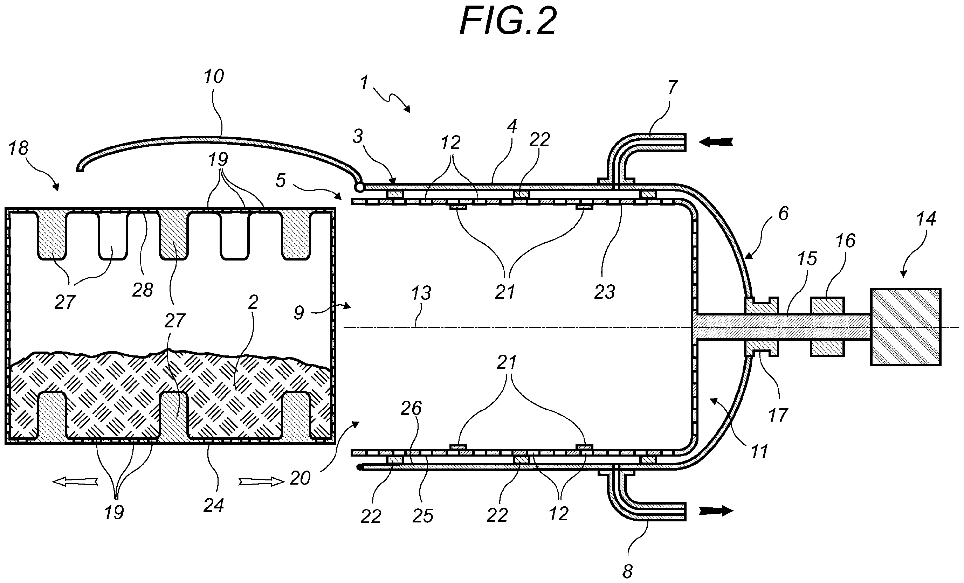

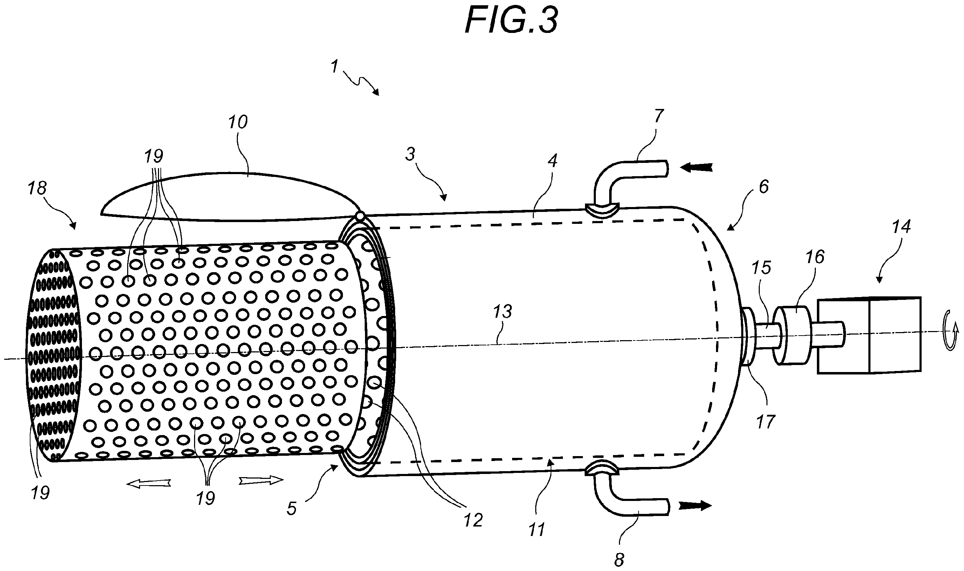

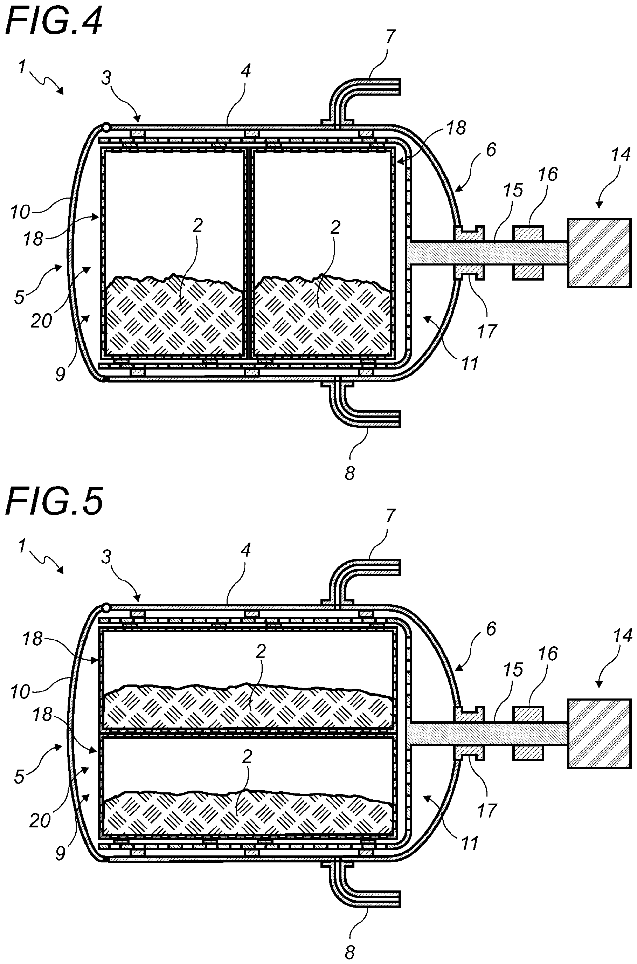

Le réacteur (1) peut comporter un seul panier amovible (18), comme cela est représenté sur les figures 1 à 3, ou plusieurs paniers amovibles (18), comme cela est représenté sur les figures 4 et 5. Dans le cas de multiples paniers amovibles (18), ces derniers peuvent être logés l'un au-dessus de l'autre (cf. figure 4) et/ou l'un derrière l'autre (cf. figure 5) dans la cage tournante (11). Dans le cas où les paniers amovibles (18) sont logés l'un au-dessus de l'autre, ils peuvent être de forme hémicylindrique.

Les articles (2) solides à traiter sont introduits dans les paniers amovibles (18). Dans ce but, les paniers amovibles (18) comportent au moins une trappe d'accès (non représentée) ou tout autre dispositif similaire. Ainsi, par exemple, une partie des paniers amovibles (18) peut être démontable ou amovible afin de permettre l'accès à l'intérieur des paniers amovibles (18). Une fois les articles (2) traités, c'est par ce moyen d'accès que les résidus solides peuvent être extraits en dehors des paniers amovibles (18). Dans le cas du recyclage d'articles (2) à base de polymère et de textile ou de fibres, la masse de textile ou de fibres qui résulte du traitement avec le solvant reste piégée dans les paniers amovibles (18).

En effet, les dimensions des multiples ouvertures (19) des paniers amovibles (18) sont prévues de sorte que les résidus solides présents dans les paniers amovibles (18) ne puissent pas passer au travers de celles-ci.

On notera d'ailleurs que les multiples ouvertures (12) de la cage tournante (11) peuvent être de plus grandes dimensions que les multiples ouvertures (19) des paniers amovibles (18).

Le but de ces multiples ouvertures (12, 19) est bien entendu de laisser passer les liquides depuis le carter (3) jusqu' à l'intérieur des paniers amovibles (18) et vice-versa. Elles permettent notamment la libre circulation du solvant, du polymère dissout et des produits de rinçage, tout en empêchant les articles (2) solides, et la masse de textile ou de fibres de se répandre en dehors des paniers amovibles (18).

Notamment dans le cas où les articles (2) à traiter sont particulièrement agressifs ou abrasifs et sont susceptibles de détériorer la face cylindrique interne (28) des paniers amovibles (18), une couche de protection (non représentée) amovible et perméable aux liquides peut être prévue contre ladite face cylindrique interne (28) des paniers amovibles (18). Cette couche de protection peut par exemple être sous la forme d'une grille ou d'un filet.

L'entraînement à rotation de la cage tournante (11) par le moteur (14) entraîne également les paniers amovibles (18) à rotation, ce qui améliore le brassage à l'intérieur des paniers amovibles (18). Afin d'améliorer ce brassage, le sens de rotation peut être inversé au cours du traitement des articles (2).

La vitesse de rotation peut être adaptée afin d'optimiser le procédé mis en oeuvre avec le réacteur (1). Cette vitesse de rotation peut être considérablement augmentée, notamment en fin de cycle de traitement des articles (2), afin d'effectuer un essorage centrifuge des produits solides qui subsistent à l'intérieur des paniers amovibles (18).

Le réacteur (1) comporte préférentiellement au moins un dispositif d'immobilisation (21) destiné à arrimer l'au moins un panier amovible (18) à l'intérieur de la cage tournante (11). Ce dispositif d'immobilisation (21) peut par exemple comporter des aimants, des moyens de fixation mécanique ou un système de rails et glissières, de sorte que l'au moins un panier amovible (18) logé à l'intérieur de la cage tournante (11) ne provoque de vibrations au sein du réacteur (1) lorsqu'il est entraîné à rotation avec la cage tournante (11). Ce dispositif d'immobilisation (21) peut être prévu sur la face cylindrique interne (23) de la cage tournante (11), sur la face cylindrique externe (24) des paniers amovibles (18), ou sur ces deux faces (23, 24).

Le réacteur (1) comporte préférentiellement au moins un dispositif de guidage (22) destiné à guider et centrer la cage tournante (11) à l'intérieur du carter (3). Ce dispositif de guidage (22) peut par exemple comporter des paliers rotatifs de guidage et permet notamment de réduire les vibrations au sein du réacteur (1) lorsque la cage tournante (11) est entraînée à rotation. Ce dispositif de guidage (22) peut être prévu sur la face cylindrique externe (25) de la cage tournante (11), sur la face cylindrique interne (26) du carter (3), ou sur ces deux faces (25, 26).

Selon un mode de réalisation préféré de l'invention, le panier amovible (18) comporte des pales d'agitation (27) réparties sur sa face interne (28) pour améliorer l'agitation et le brasage à l'intérieur du panier amovible (18).

Le diamètre interne de l'ouverture (9) du carter (3) équipée d'un couvercle (10) est préférentiellement supérieur ou égal au diamètre interne de la cage tournante (11) afin de permettre un accès total à la face ouverte (20) de la cage tournante (11).

Selon un mode de réalisation préféré de l'invention non représenté sur les figures, le réacteur (1) peut comporter un dispositif automatisé comportant des actionneurs prévus pour introduire le panier amovible (18) à l'intérieur de la cage tournante (11) et l'en extraire. Ce dispositif automatisé, qui est évident pour l'homme du métier issu du domaine de la robotique et de l'automatisation, n'est pas détaillé ici.

Selon un mode autre de réalisation préféré de l'invention non représenté sur les figures, le réacteur (1) peut également comporter un dispositif de guidage en translation du panier amovible (18) à l'intérieur de la cage tournante (11), comprenant par exemple un système à rails et glissières, pour faciliter l'introduction des paniers amovibles (18) à l'intérieur de la cage tournante (11) et leur extraction.

Le dispositif de guidage en translation du panier amovible (18) à l'intérieur de la cage tournante (11) et le dispositif de guidage (22) destiné à guider et centrer la cage tournante (11) à l'intérieur du carter (3) peuvent comporter des pièces communes aux deux dispositifs, où même être sous la forme d'un seul et même dispositif.

L'invention concerne également un procédé de recyclage d'articles (2) à base de polymère et de textile ou de fibres au moyen du réacteur (1) de l'invention. Elle concerne les procédés similaires à celui du brevet EP 2276801 B1 au moyen du réacteur (1) de l'invention, mais aussi tout autre procédé de traitement, de dissolution ou de mise en solution d'une matière solide dans un solvant au moyen du réacteur (1) de l'invention.

L'utilisation de solvants à l'intérieur du réacteur (1) de l'invention implique une parfaite étanchéité du réacteur aux gaz et aux liquides alors que ce dernier est soumis à des conditions de pression et de températures variables.

Selon un autre exemple de réalisation non représenté sur les figures le réacteur comporte au moins un dispositif externe destiné à aider l'opérateur à introduire le panier amovible (18) à l'intérieur de la cage tournante (11). Ce dispositif externe peut notamment comporter des glissières ou une rampe sur lesquels le panier amovible (18) peut glisser pour pénétrer à l'intérieur de la cage tournante (11). Ce dispositif externe peut également comporter tout dispositif de suspension, par exemple à portique, permettant de soulever et déplacer le panier amovible (18) en dehors du réacteur (1) de l'invention.

## Revendications

1. Réacteur (1) horizontal comportant un carter (3) externe fixe de forme générale cylindrique circulaire, équipé d'au moins une entrée de liquide (7) et d'au moins une sortie de liquide (8), avec une paroi cylindrique (4) bordée par une face frontale (5) et une face distale (6) opposées, **caractérisé en ce que** le carter (3) présente une ouverture (9) prévue dans sa face frontale (5), cette ouverture (9) étant équipée d'un couvercle (10) pouvant être refermé de manière étanche, et **en ce que** le réacteur (1) comporte en outre une cage tournante (11) de forme générale cylindrique circulaire, comportant de multiples ouvertures (12), logée dans le carter (3) et montée à rotation autour d'un axe sensiblement horizontal se prolongeant selon l'axe longitudinal du carter (3), un moteur (14) pour entraîner la cage tournante (11) à rotation, un unique arbre rotatif (15) horizontal reliant mécaniquement la cage tournante (11) au moteur (14) et se prolongeant vers l'extérieur depuis la face distale (6) du carter (3), au moins un palier (16) prévu autour de l'arbre rotatif (15) pour le maintenir et le guider, et supporter le poids de la cage tournante (11) en porte à faux, au moins un panier amovible (18) comportant de multiples ouvertures (19) et prévu pour pouvoir être introduit à l'intérieur de la cage tournante (11) et en être extrait au travers d'une face circulaire (20) ouverte de la cage tournante (11) prévue en regard de l'ouverture (9) équipée d'un couvercle (10).

2. Réacteur (1) selon la revendication 1, **caractérisé en ce que** le réacteur (1) comporte au moins un dispositif d'immobilisation (21) destiné à arrimer l'au moins un panier amovible (18) à l'intérieur de la cage tournante (11).

3. Réacteur (1) selon la revendication 1 ou 2, **caractérisé en ce que** le réacteur (1) comporte au moins un dispositif de guidage (22) destiné à guider et centrer la cage tournante (11) à l'intérieur du carter (3).

4. Réacteur (1) selon l'une quelconque des revendications précédentes, **caractérisé en ce que** le réacteur (1) comporte au moins un palier d'étanchéité (17) prévu sur l'arbre rotatif (15) au niveau de la face distale (6) du carter (3) de sorte d'assurer l'étanchéité entre le carter (3) et l'arbre rotatif (15).

5. Réacteur (1) selon l'une quelconque des revendications précédentes, **caractérisé en ce que** le panier amovible (18) comporte des pales d'agitation (27) réparties sur sa face interne (28).

6. Réacteur (1) selon l'une quelconque des revendications précédentes, **caractérisé en ce que** le diamètre interne de l'ouverture (9) du carter (3) équipée d'un couvercle (10) est supérieur ou égal au diamètre interne de la cage tournante (11).

7. Réacteur (1) selon l'une quelconque des revendications précédentes, **caractérisé en ce qu'**au moins un panier amovible (18) est de forme générale cylindrique.

8. Réacteur (1) selon l'une quelconque des revendications précédentes, **caractérisé en ce que** le carter (3) est étanche lorsque le couvercle (10) est fermé.

9. Réacteur (1) selon l'une quelconque des revendications précédentes, **caractérisé en ce que** le panier amovible (18) comporte une couche de protection amovible et perméable aux liquides sur sa face interne.

10. Réacteur (1) selon la revendication précédente, **caractérisé en ce que** la couche de protection amovible est une grille ou un filet.

11. Réacteur (1) selon l'une quelconque des revendications précédentes, **caractérisé en ce que** le panier amovible (18) comporte au moins une trappe d'accès.

12. Réacteur (1) selon l'une quelconque des revendications précédentes, **caractérisé en ce qu'**il comporte un dispositif automatisé comportant des actionneurs prévus pour introduire le panier amovible (18) à l'intérieur de la cage tournante (11) et l'en extraire.

13. Réacteur (1) selon l'une quelconque des revendications précédentes, **caractérisé en ce qu'**il comporte un dispositif de guidage (22) en translation du panier amovible (18) à l'intérieur de la cage tournante (11).

14. Réacteur (1) selon l'une quelconque des revendications précédentes, **caractérisé en ce que** l'arbre rotatif (15) comporte un conduit traversant (29) présentant une extrémité d'alimentation (30) prévue pour être raccordée à une alimentation en vapeur ou un liquide et une extrémité de sortie (31) qui débouche à l'intérieur d'au moins un panier amovible (18).

15. Procédé de recyclage d'articles (2) à base de polymère et de textile ou de fibres dans lequel ces articles (2) sont soumis à une dissolution du polymère au moyen d'un solvant dans un réacteur (1) selon l'une quelconque des revendications précédentes.

## Patentansprüche

1. Horizontaler Reaktor (1) mit einem festen, externen Gehäuse (3) in einer allgemein ringförmigen Zylinderform, ausgerüstet mit mindestens einem Flüssigkeitseinlass (7) und mindestens einem Flüssigkeitsauslass (8), mit einer Zylinderwand (4), die begrenzt wird von einer Frontwand (5) und einer gegenüberliegenden distalen Seite (6), **dadurch gekennzeichnet, dass** das Gehäuse (3) eine Öffnung (9) aufweist, die in der Frontwand (5) vorgesehen ist, diese Öffnung (9) ist dabei ausgerüstet mit einem Deckel (10), der dicht verschließbar ist, und dadurch, dass der Reaktor (1) außerdem einen Drehkäfig (11) enthält, in einer allgemein ringförmigen Zylinderform, mit zahlreichen Öffnungen (12), untergebracht im Gehäuse (3) und in Rotation um eine im Wesentlichen horizontale Achse montiert, die entlang einer Längsachse des Gehäuses (3) verläuft, ein Motor (14) zum Antrieb des Drehkäfigs (11), eine einzige horizontale drehende Welle (15), die mechanisch den Drehkäfig (11) mit dem Motor (14) verbindet und sich nach außen von der distalen Seite (6) des Gehäuses (3) aus verlängert, mindestens ein Lager (16), vorgesehen um die drehende Welle (15) herum, um sie zu halten und zu führen, und das Gewicht des Drehkäfigs (11) freitragend zu halten, mindestens einen abnehmbaren Korb (18) mit zahlreichen Öffnungen (19) und vorgesehen, um ins Innere des Drehkäfigs (11) eingeführt zu werden und durch eine offene ringförmige Fläche (20) des Drehkäfigs (11) entnommen zu werden, die gegenüber der Öffnung (9) angeordnet und mit einem Deckel (10) ausgerüstet ist.

2. Reaktor (1) nach Anspruch 1, **dadurch gekennzeichnet, dass** der Reaktor (1) mindestens eine Immobilisierungsvorrichtung (21) enthält, vorgesehen um den mindestens einen abnehmbaren Korb (18) innerhalb des Drehkäfigs (11) sicher zu befestigen.

3. Reaktor (1) nach Anspruch 1 oder 2, **dadurch gekennzeichnet, dass** der Reaktor (1) mindestens eine Führungsvorrichtung (22) enthält, die dazu bestimmt ist, den Drehkäfig (11) innerhalb des Gehäuses (3) zu führen und zu zentrieren.

4. Reaktor (1) nach irgendeinem der vorstehenden Ansprüche, **dadurch gekennzeichnet, dass** der Reaktor (1) mindestens ein Abdichtungslager (17) enthält, vorgesehen auf der drehenden Welle (15) in Höhe der distalen Seite (6) des Gehäuses (3), so dass eine Abdichtung zwischen dem Gehäuse (3) und der drehenden Welle (15) gewährleistet ist.

5. Reaktor (1) nach irgendeinem der vorstehenden Ansprüche, **dadurch gekennzeichnet, dass** der abnehmbare Korb (18) Rührflügel (27) enthält, die auf der Innenseite (28) verteilt sind.

6. Reaktor (1) nach irgendeinem der vorstehenden Ansprüche, **dadurch gekennzeichnet, dass** der Innendurchmesser der Öffnung (9) des Gehäuses (3), mit einem Deckel (10), größer oder gleich dem Innendurchmesser des Drehkäfigs (11), ausgerüstet ist.

7. Reaktor (1) nach irgendeinem der vorstehenden Ansprüche, **dadurch gekennzeichnet, dass** mindestens ein abnehmbarer Korb (18) eine allgemein zylindrische Form hat.

8. Reaktor (1) nach irgendeinem der vorstehenden Ansprüche, **dadurch gekennzeichnet, dass** das Gehäuse (3) dicht ist, wenn der Deckel (10) geschlossen ist.

9. Reaktor (1) nach irgendeinem der vorstehenden Ansprüche, **dadurch gekennzeichnet, dass** der abnehmbare Korb (18) eine abnehmbar und auf der Innenseite gegenüber Flüssigkeiten durchlässige Schutzschicht enthält.

10. Reaktor (1) nach dem vorangehenden Anspruch, **dadurch gekennzeichnet, dass** die abnehmbare Schutzschicht ein Gitter oder ein Netz ist.

11. Reaktor (1) nach irgendeinem der vorstehenden Ansprüche, **dadurch gekennzeichnet, dass** der abnehmbare Korb (18) mindestens eine Zugangsklappe enthält.

12. Reaktor (1) nach irgendeinem der vorstehenden Ansprüche, **dadurch gekennzeichnet, dass** er eine automatisierte Vorrichtung enthält, mit Stellgliedern, vorgesehen zur Einführung des abnehmbaren Korbs (18) ins Innere des Drehkäfigs (11) und zu seiner Herausnahme.

13. Reaktor (1) nach irgendeinem der vorstehenden Ansprüche, **dadurch gekennzeichnet, dass** er eine Führungsvorrichtung (22) in Translation für den abnehmbaren Korb (18) im Innern des Drehkäfig (11) enthält.

14. Reaktor (1) nach irgendeinem der vorstehenden Ansprüche, **dadurch gekennzeichnet, dass** die drehende Welle (15) eine durchführende Leitung (29) enthält, die ein Einspeiseendstück (30) enthält, vorgesehen zum Anschluss an eine Dampf- oder Flüssigkeitsversorgung und ein Auslassendstück (31), das im Inneren des mindestens eines abnehmbaren Korbes mündet.

15. Verfahren zum Recycling von Artikeln (2) auf Basis von Polymer und Textil oder Fasern, in denen diese Artikel (2) einer Auflösung des Polymers durch ein Lösungsmittel in einem Reaktor (1) nach irgendeinem der vorstehenden Ansprüche ausgesetzt sind.

## Claims

1. A horizontal reactor (1) comprising a fixed outer housing (3) of generally circular cylindrical shape, equipped with at least one liquid inlet (7) and at least one liquid outlet (8), with a cylindrical wall (4) bordered by a front face (5) and a distal face (6) opposite to each other, **characterized in that** the housing (3) has an opening (9) provided in its front face (5), this opening (9) being equipped with a cover (10) which can be closed in a sealed manner, and **in that** the reactor (1) further comprises a rotating cage (11) of generally circular cylindrical shape, comprising multiple openings (12), housed in the housing (3) and rotatably mounted around a substantially horizontal axis extending along the longitudinal axis of the housing (3), a motor (14) for driving the rotating cage (11) in rotation, a single horizontal rotary shaft (15) mechanically connecting the rotating cage (11) to the motor (14) and extending outwards from the distal face (6) of the housing (3), at least one bearing (16) provided around the rotary shaft (15) to hold it and guide it, and to support the weight of the rotating cage (11) in cantilever, at least one removable basket (18) comprising multiple openings (19) and intended to be able to be introduced inside the rotating cage (11) and to be removed therefrom through an open circular face (20) of the rotating cage (11) provided opposite the opening (9) equipped with a cover (10).

2. The reactor (1) according to claim 1, **characterized in that** the reactor (1) comprises at least one immobilization device (21) intended to secure the at least one removable basket (18) inside the rotating cage (11).

3. The reactor (1) according to claim 1 or 2, **characterized in that** the reactor (1) comprises at least one guiding device (22) intended to guide and center the rotating cage (11) inside the housing (3).

4. The reactor (1) according to any one of the preceding claims, **characterized in that** the reactor (1) comprises at least one sealing bearing (17) provided on the rotary shaft (15) at the distal face (6) of the housing (3) so as to seal between the housing (3) and the rotary shaft (15).

5. The reactor (1) according to any one of the preceding claims, **characterized in that** the removable basket (18) comprises stirring blades (27) distributed over its internal face (28).

6. The reactor (1) according to any one of the preceding claims, **characterized in that** the internal diameter of the opening (9) of the housing (3) equipped with a cover (10) is greater than or equal to the internal diameter of the rotating cage (11).

7. The reactor (1) according to any one of the preceding claims, **characterized in that** at least one removable basket (18) is generally cylindrical in shape.

8. The reactor (1) according to any of the preceding claims, **characterized in that** the housing (3) is sealed when the cover (10) is closed.

9. The reactor (1) according to any one of the preceding claims, **characterized in that** the removable basket (18) comprises a removable protective layer permeable to liquids on its internal face.

10. The reactor (1) according to the preceding claim, **characterized in that** the removable protective layer is a grid or a net.

11. The reactor (1) according to any one of the preceding claims, **characterized in that** the removable basket (18) comprises at least one access hatch.

12. The reactor (1) according to any one of the preceding claims, **characterized in that** it comprises an automated device comprising actuators provided for introducing the removable basket (18) inside the rotating cage (11) and for removing it therefrom.

13. The reactor (1) according to any one of the preceding claims, **characterized in that** it comprises a guiding device (22) in translation of the removable basket (18) inside the rotating cage (11).

14. The reactor (1) according to any one of the preceding claims, **characterized in that** the rotary shaft (15) comprises a through pipe (29) having a supply end (30) intended to be connected to a steam or liquid supply and an outlet end (31) which opens inside at least one removable basket (18).

15. A process for recycling articles (2) based on polymer and textile or fibers wherein these articles (2) are subj ected to a dissolution of the polymer by means of a solvent in a reactor (1) according to any one of the preceding claims.
